# EUROPEAN PATENT APPLICATION

(11) **EP 1 400 986 A1**
(43) Date of publication of application: **24.03.2004**
(21) Application number: 02793428.0
(22) Date of filing: 26.12.2002
(51) Int. Cl.: H01B 1/06, H01M 8/02

(54) **PROTON-CONDUCTIVE GEL, PROTON CONDUCTOR, AND PROCESSES FOR PRODUCING THESE**

(30) Priority: 16.01.2002 JP 2002007686
(71) Applicant: Nagoya Industrial Science Research Institute, Nagaya-shi, Aichi 460-0008 (JP)
(72) Inventor: KASUGA, Toshihiro Q-3, Grand-maison Otai, Nishikasugai-gun, Aichi 452-0022 (JP)
(74) Representative: KUHNEN & WACKER
(86) International application number: PCT/JP2002/013724
(87) International publication number: WO 2003/060925

(57) **Abstract**

Proton conducting gel, and proton conductor having high ionic conductivity near room temperature, which can be reduced in the thickness and enlarged in the size easily and which can provide excellent practical effect for products such as fuel cells, as well as a production process for them are provided. A gel having a dispersion phase comprising a phosphate molecular chains and a dispersion medium comprising water is used.

## Description

### Technical Field

The present invention concerns a proton conducting gel, proton conductor and a production process thereof. The proton conducting gel and the proton conductor according to the invention are suitable for use in fuel cells using hydrogen as a fuel and hydrogen sensors. Particularly, fuel cells are expected for the application use to electric automobiles, hybrid cars, installed type power sources and co-generation system.

### Background Art

Ionic conductors of moving ions by the application of voltage have been known. Since the ionic conductors can be used as a constituent of an electrochemical device such as a cell or an electrochemical sensor, extensive studies have been made. A proton conductor as a sort of the ionic conductor has hydrogen ions as the conductive ion species, which is particularly expected for the constituent of fuels cell using hydrogen as a fuel, or hydrogen sensors. For example, for the proton conductor that can be adopted as an electrolyte for a fuel cell, it is desired that it shows a high ionic conductivity near a room temperature in view of the demand for easy handling and heat resistance.

Heretofore, as the proton conductor having such properties, inorganic crystal type proton conductors such as uranyl phosphoric acid hydrates and morybdophosphoric acid hydrates, and organic type proton conductors such as polymeric ion exchange membranes ("NAPHION" (registered trademark)) having side chains containing persulfonic acid groups in fluoro vinylic polymers have been known. Further, it has been also known recently sol-gel porous glass comprising silicates as a main ingredient, with addition of a small amount of phosphoric acid and produced by a sol-gel method is also known to exhibit high ionic conductivity near room temperature recently.

### Disclosure of the Invention

However, since the existent inorganic crystal type proton conductor described above is a solid of fine crystals showing proton conductivity, it is difficult to reduce the thickness and increase the size. Accordingly, even when the inorganic crystal type proton conductor is adopted, for example, as the electrolyte for use in fuel cells, since the electrolyte is thick and small in the fuel cell, it is difficult to obtain high power. Further, the fuel cell has large internal resistance and has no sufficient electric generation efficiency. Therefore, the inorganic crystal type proton conductor is not suitable to the fuel cell for use in electric automobiles or installed type power source.

On the other hand, the organic type proton conductor or sol-gel porous glass can be easily reduced in the thickness and increased in the size by spreading the solution thereof thinly on a plane and evaporating a solvent. Accordingly, when the thus obtained proton conductor is adopted, for example, as the electrolyte for use in the fuel cell, the fuel cell can provide high power and excellent electric generation efficiency. Therefore, polymeric solid electrolyte using the ion exchange membrane has been developed vigorously as the fuel cell for use in the electric automobiles or installed type power sources.

However, in the existent polymeric ion exchange membrane or the sol-gel porous glass, a steam pressure at the periphery thereof has to be increased approximately to a saturation state in order to improve the ionic conductivity. Since fine pores are present in the proton conductor and water adsorbed in the pores has an effect of improving the ionic conductivity, the adsorption amount of water is increased to increase the ionic conductivity as the steam pressure at the periphery of the proton conductor is higher. Accordingly, in a case of using the known polymeric ion exchange membrane or the sol-gel porous glass, for example, as the electrolyte for use in the fuel cell, the fuel cell requires a humidifier, which enlarges the size of the system and gives a significant bar to practical use. Further, since the ionic conductivity in the fuel cell changes greatly depending on the ambient humidity, such a humidifier has to be controlled stably and this also gives a significant bar to practical use.

Further, in a case of using the polymeric ion exchange membrane or the sol-gel porous glass, for example, as the electrolyte for use in the fuel cell, fuel itself such as methanol for supplying hydrogen tends to permeate in the fuel cell because of fine pores present in the polymeric ion exchange membranes. Therefore, in the fuel cell, for example, of a type in which methanol is introduced directly to the anode, a phenomenon of directly causing chemical reaction between methanol and an oxidizer tends to occur (cross over phenomenon) on the cathode which tends to worsen the electric generation efficiency.

Further, since the sol-gel porous glass is extremely fragile and destroyed by application of even small shocks, it results in a fuel cell sensitive to shocks.

The present invention has been achieved in view of the foregoing situations in the prior art and it is a subject thereof to solve the subject of providing a proton conducting gel and a proton conductor in which ionic conductivity is high near the room temperature, which can be reduced in the thickness and increased in the size easily and which can provide excellent practical effect for the products such as fuel cells, as well as a production process thereof.

The present inventor has already found a specific phenomenon that a powder of phosphate glass is rapidly reacted with water at a normal temperature and transformed into a viscous gel (Chemistry Letters, in 2001, pages 820 to 821). As a result of a further earnest study on the viscous gel, the inventor has found that the gel is a proton conducting gel having high ionic conductivity to accomplish the invention. The ionic conductivityof the proton conducting gel or the proton conductor is equal with the proton conductivity in a case where there is no other conduction of ion than proton.

The proton conducting gel according to the invention has a dispersion phase comprising phosphate molecular chains and a dispersion medium comprising water.

In the existent proton conductors typically represented by the known polymeric ion exchange membrane and the sol-gel porous glass, the conduction path of protons is ensured to conduct proton usually by incorporation of a great amount of OH groups or application of water such as steams from the outside. According to the study of the inventor, it is considered that phosphate molecular chains comprising a great amount of OH groups bonded to phosphorous atoms are present as the dispersion phase and a great amount of water is present as the dispersion medium at the periphery for each of OH groups of the phosphate molecular chains in the proton conducting gel of the invention. Since the phosphoric acid is strongly acidic, it is considered that OH groups on the phosphate molecular chains tend to dissociate protons and the dissociated protons are conducted successively by way the of proton conduction path comprising molecules of water and other OH groups ordinated at the periphery. According to the study of the inventor, the proton conducting gel has excellent proton conductivity near the room temperature.

Further, fine pores are scarcely present in the proton conductor gel having water as the dispersion medium and the proton conduction path is always maintained. Particularly, according to the study of the inventor, since the proton conducting gel is stabilized by taking ambient water such as atmospheric air by itself, the ionic conductivity does not change greatly depending on the ambient humidity.

Accordingly, when the proton conductor obtained by the proton conducting gel according to the invention is adopted as the electrolyte for the fuel cell, the fuel cell can provide high power and has sufficient electric generation efficiency. Further, in the fuel cell, since the proton conducting gel always maintained the proton conduction path spontaneously, there is no requirement of providing a humidifier or the like for improving the ionic conductivity to attain a miniaturization of the system. Particularly, since the ionic conductivity of the proton conducting gel does not change greatly depending on the ambient humidity, complicate control for the moisture control is scarcely necessary in the fuel cell. Further, since the proton conducting gel using water as the dispersion medium scarcely has fine pores in the fuel cell, it less permeates the fuel itself such as methanol. Accordingly, even when the fuel cell is of a type of directly introducing methanol to the anode, the crossover phenomenon is less caused to keep high electric generation efficiency easily. As described above, the proton conducting gel or the proton conductor provides excellent practical effect for the fuel cell.

Further, the production process for the proton conductor comprising the polymeric ion exchange membrane or the sol-gel porous glass is relatively complicated and involves a problem of increasing the production cost when it is adopted as the electrolyte for use in the fuel cell. On the contrary, since the proton conducting gel of the invention uses a relatively inexpensive inorganic compound such as phosphoric acid as the starting material and the production process thereof is relatively simple as well, the production cost can be lowered.

The proton conducting gel of the invention can be produced by the following production process for the proton conducting gel according to the invention. The production process comprises a vitrifying step of obtaining phosphate glass, and a gelling step of reacting a phosphate glass powder formed by pulverizing the phosphate glass with water to obtain a proton conducting gel.

In the production process for the proton conducting gel according to the invention, phosphate glass is obtained at first in the vitrifying step. For example, the phosphate glass is obtained by melting phosphoric acid under heating and then quenching the same. Further, in a case where the phosphate glass contains, for example, at least one of bivalent metal ions of Ca²⁺, Mg²⁺ and Zn²⁺, the phosphate glass is obtained, for example, by mixing phosphoric acid and a metal carbonate such as calcium carbonate, melting them under heating and then quenching the same.

Then, as the gelling step, the phosphate glass powder formed by pulverizing phosphate glass is reacted with water to obtain a proton conducting gel. For example, the phosphoric acid glass is pulverized into a powder and the powder and water are reacted to form a proton conducting gel. Further, in a case where the phosphate glass contains bivalent metal ions, the proton conducting gel can be formed, for example, by pulverizing calciumphosphate glass into apowder andby reacting the powder with water. When the phosphate glass and water are in contact with each other, hydrolysis occurs rapidly from the surface of the phosphate glass to cause disconnection for the long chain of the phosphate and, as a result, the phosphate groups are leached. As a result, the activity of the proton increases and the proton disconnects a portion of the coordination portion of glass network modification ions and is bound to the phosphate molecular chains. As a result of triggered coordination of molecules of water to the phosphate molecular chains by hydrogen bond, a proton conducting gel as a condensation product of phosphate having fluidity can be obtained.

Thus, the phosphate glass intakes water by itself to form a proton conducting gel. For example, when a phosphate glass powder is mixed in excess water, the proton conducting gel precipitates in water. Accordingly, the proton conducting gel of the invention determines a ratio between the dispersion phase comprising the phosphate molecular chains and the dispersion medium comprising water spontaneously while undergoing the effects of oxides of metals other than phosphorous in the phosphate glass, structure of the phosphate molecular chains and other compositions. According to the study of the inventor, the proton conducting gel becomes stable by containing 10 to 70 mass%, more specifically, 40 to 50 mass% of water.

The phosphate glass as the starting material can contain various metal oxides and, according to the study of the inventor, it is desirable to contain at least one of bivalent metal oxides, particularly, oxides of Ca, Mg and Zn. In other words, it is preferred that the phosphate molecular chains contain at least one of bivalent metal ions, particularly, Ca²⁺, Mg²⁺, and Zn²⁺. This is because gelation of the phosphate glass is sometimes difficult upon production of the proton conducting gel in a case where the phosphate glass does not contain oxides of bivalent metals, that is, in a case where the phosphate molecular chain does not contain the bivalent metal ions. This can be explained from the mechanism where glass and water are reacted to cause gelation described above. Accordingly, gelation of the phosphate glass less occurs without using an element such as a bivalent metal having not relatively high bonding strength of ions coordinated to the phosphate molecular chains in the phosphate glass. The inventor has confirmed the effect for Ca, Mg and Zn. On the other hand, in a case of an alkali oxide comprising a monovalent metal such as Na and K, since the ionic bonding strength is excessively low, alkali ions coordinated to the phosphate molecular chains and the protons cause complete ion exchange. Accordingly, the phosphate glass is merely dissolved and the phosphate glass only consisting of the phosphoric acid ingredient and the alkali oxide causes less gelation. Further, in a case of an oxide comprising a trivalent metal such as Al or B, since the ionic bonding strength is excessively high, hydrolysis of the phosphate glass becomes difficult, thereby making it difficult to produce the proton conducting gel. Further, since Ca²⁺, Mg²⁺ and Zn²⁺ show low toxicity and compounds containing such metal ions are inexpensive, production cost can be decreased as well.

Glass has a merit capable of introducing various elements. For example, when glass is manufactured by mixing a sulfate composition for the ingredient and a powder obtained by pulverizing the same is reacted with water, a proton conducting gel containing sulfon groups can be obtained. The proton conducting gel contains sulfon groups in the phosphate molecular chains. Since the sulfon group dissociates the proton more easily than phosphoric acid, the proton conducting gel thus obtained provides higher proton conductivity.

According to the study of the inventor, two kinds of chains, i.e., phosphate molecular chains of a linear structure and phosphate molecular chains of a cyclic structure are present together in the phosphate molecular chains present in the proton conducting gel. The chain length of them can not be determined generally. The constitution of them can be detected by using, for example, high performance liquid chromatograph measuring apparatus.

Among them, phosphate molecular chains of the linear structure are crystallized by heating. Accordingly, when a proton conducting gel containing the phosphate molecular chains of the linear structure in the dispersion phase is heated, it is possible to prepare a proton conductor of high mechanical strength in which layered crystals are deposited. In a case of the phosphate molecular chain of the linear structure, the gelation state tends to be kept more easily as the chain length is longer. This is because the viscosity is lowered as the chain length is shorter, thereby failing to obtain the shape. Accordingly, the dispersion phase can be selected by incorporating the phosphate molecular chains of the linear structure depending on the application use.

On the other hand, since the phosphate molecular chains of the cyclic structure in the dispersion phase are not constituted with an extremely short chain length, the state of gelation is kept for a long period of time. Accordingly, by the use of a proton conducting gel containing the phosphate molecular chains of the cyclic structure in the dispersion phase, it is possible to produce a proton conductor which less changes the gelation state depending on the temperature. Therefore, a dispersion phase containing the phosphate molecular chain of the cyclic structure can be selected also depending on the application use.

According to the study of the inventor, the ionic conductivityof theproton conductinggel or theproton conductor is higher as more phosphate ingredient is contained. With this view point, it is preferred that the phosphate molecular chains contains phosphoric acid within a range from 30 to 75 mol% as P₂O₅. At 30 mol% or more, proton conductivity to some extent can be obtain, whereas at less than 30 mol%, phosphate glass can not be obtained easily. Above 75 mol%, the proton conducting gel or the proton conductor is chemically instable and tends to absorb moisture in air and decompose easily. Particularly, it is preferred that the phosphate molecular chains contain phosphoric acid within a range from 40 to 70 mol% as P₂O₅. This is because the proton conductivity is still low at less than 40 mol%. More preferably, the phosphate molecular chains contain phosphoric acid within a range from 50 to 60 mol% as P₂O₅. The proton conducting gel containing the phosphate molecular chains within the range described above show high proton conductivity and has high chemical stability.

Further, in the production process for the proton conducting gel according to the invention, other proton conduction composition may also be incorporated to the proton conducting gel in the gelation step. For other proton conduction composition, known uranyl phosphoric acid hydrates, molybdophosphoric acid hydrates, polymeric ion exchange membrane and sol-gel porous glass, etc. may be used. In this case, a proton conducting gel having properties both of the proton conducting gel and other proton conduction composition can be obtained. While the sol-gel porous glass involves a problem that it is mechanically fragile extremely, when it is composited with the proton conducting gel of the invention, the proton conducting gel of the invention can be used as a binder which enables to constitute a proton conductor capable of overcoming the fragility without lowering the proton conductivity. Further, when the polymeric ion exchange film containing sulfonic groups and the proton conducting gel of the invention are composited, swelling of the polymer by humidification can be prevented. Further, since a layered compound such as Zr (HPO₄)₂·2H₂O having water between the layers exhibits proton conductivity, it is difficult to be used being formed into an appropriate shape since this is obtained in the form of a powder. However, when this is composited with the proton conducting gel of the invention, a proton conductor capable of overcoming the fragility can also be constituted without lowering the proton conductivity.

The proton conductor of the invention comprises the proton conducting gel described above, and other proton conduction composition. The proton conductor provides a proton conductor having both the properties of the proton conducting gel described above and other proton conduction composition and the characteristics such as mechanical strength can further be improved.

A first production process for the proton conductor according to the invention comprises molding the proton conducting gel into a proton conductor. In the production process, a proton conductor of an optional shape can be produced from the proton conducting gel described above.

Further, a second production process for the proton conductor according to the invention comprises a vitrifying step for obtaining phosphate glass, a molding step of obtaining a molding product from a phosphate glass powder formed by pulverizing the phosphate glass and a reaction step of reacting the molding product with water into a proton conductor. The production process has a merit for facilitating the handling of the molding product since the molding product is obtained previously by the molding step and the molding product is reacted with water into a proton conductor in the reaction step.

In the second production process for the proton conductor of the invention, other proton conduction composition may also be incorporated in the molding product in the molding step. Thus, a proton conductor also having the property of other proton conduction composition can also be obtained and it is possible to further improve the characteristics such as mechanical strength.

### Brief Description of the Drawings

Fig. 1 is a graph showing a relationbetween the temperature and the ionic conductivity for the proton conducting gel of specimens 1 to 3.
Fig. 2 is a graph showing a relation between the relative humidity and the ionic conductivity for the proton conducting gel of specimen 1 and sol-gel porous glass as a comparative specimen.
Fig. 3 is a graph showing the result of measurement by high performance liquid chromatograph for specimen 1.
Fig. 4 is a graph showing a relation between mol% as P₂O₅ and the ionic conductivity for proton conducting gel of specimens 1, and 4 to 15.
Fig. 5 is a graph showing the ionic conductivity within a range of room temperature at a relative humidity of 70% for the proton conductor of specimen 18.

### Best Mode for Practicing the Invention

The present invention is to be described by way of tests 1 to 9.

### [Test 1]

### (Specimen 1)

### < Vitrifying step >

Calcium carbonate and phosphoric acid were provided and they were weighed respectively such that phosphoric acid was 50 mol% as P₂O₅ and the total amount of them was 30 g. They were placed in a beaker with addition of water, stirred and mixed sufficiently and then placed in a drier and dried at 100°C for 24 hours. The thus obtained dried powder mixture was placed in the platinum crucible, which was placed in an electric furnace kept at 1350°C and heated for 30 min and melted. Subsequently, the platinum crucible was taken out of the electric furnace and the molten product was cast on a graphite plate and then cooled as it was to a room temperature. Thus, calcium phosphate glass can be obtained. The obtained calcium phosphate glass was pulverized in an alumina mortar into a maximum grain size of 10 µm or less, to obtain a calcium phosphate glass powder.

### < Gelation step >

Then, 2 g of the calcium phosphate glass powder was placed in a plastic vessel, 2 mL of distilled water was added and stirred and then left at a room temperature for 3 days while applying a cover. Thus, a viscous proton conducting gel was obtained.

### (Specimen 2)

For the Specimen 2, magnesiumphosphate glass was obtained by using magnesium oxide instead of calcium carbonate in the Specimen 1 to obtain a proton conducting gel. Other conditions are identical with those for Specimen 1.

### (Specimen 3)

For the Specimen 3, zinc phosphate glass was obtained by using zinc oxide instead of calcium carbonate in the Specimen 1 to obtain a proton conducting gel. Other conditions are identical with those for Specimen 1.

### (Comparative sample)

For the comparative specimen, sol-gel porous glass was prepared as below. At first, 13.28 mL of tetramethoxysilane, 7.92 mL of distilled water, 6 mL of ethanol and 5 mL of an aqueous hydrochloric acid solution at 0.15 mol/L were mixed in a beaker to form a mixed solution.

After stirring the mixed solution for one hour, 2.30 mL of tetramethoxy phosphoric acid was added and they were stirred for further one hour. Then, 12 mL of formamide was further added and, after stirring for one hour, the sol in the beaker was placed in a plastic vessel. The plastic vessel was stood still at a room temperature for one month and the sol in the plastic container was dried to obtain a dry gel.

The obtained dry gel was placed in an electric furnace and heated at 600°C for 3 hours. Then, electric supply to the electric furnace was stopped and the gel was cooled spontaneously in the electric furnace. Thus, sol-gel porous glass was obtained. The sol-gel porous glass had a specific surface area according BET of 400 m²/g and a mean pore radius of 2 nm.

### (Evaluation 1)

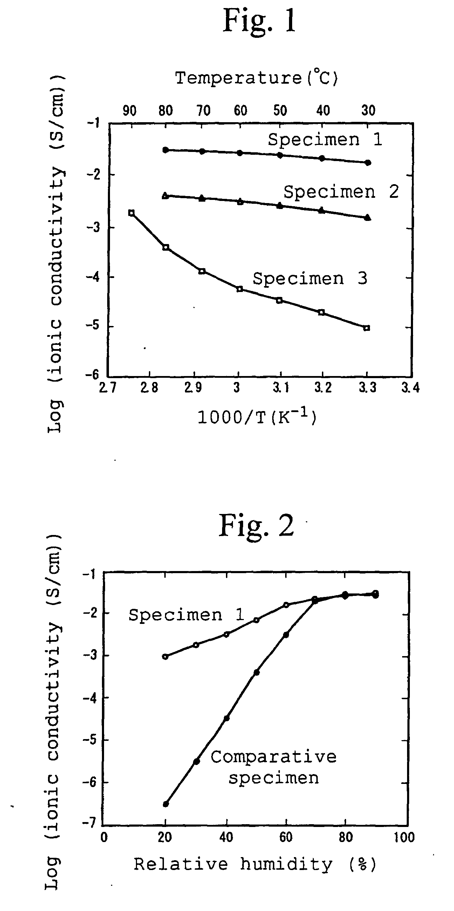

For the proton conducting gel of the Specimens 1 to 3, ionic conductivity was measured by the following AC impedance method. That is, a glass frame of 1 mm thickness formed with a circular hole of 10 mmφ was provided and each proton conducting gel of the Specimens 1 to 3 was filled in the hole. Then, both surfaces of the filled proton conducting gel were put between 10 mmφ gold electrodes, which was used as a measuring cell, and ionic conductivity was measured by an AC impedance measuring device. Measurement was conducted by changing the temperature while keeping the relative humidity at 70% so as not to dry the proton conducting gel. The result is shown in Fig. 1.

As shown in Fig. 1, the proton conducting gel of the Specimen 1 showed an extremely high ionic conductivity of 20 to 30 mS/cm at a low temperature of 30 to 80°C near the room temperature. Further, the ionic conductivity was 1.7 to 4.2 mS/cm for the proton conducting gel of the Specimen 2 and the ionic conductivity was 0.01 to 2 mS/cm for the proton conducting gel of Specimen 3. Any of them had ionic conductivity not so high as that of the proton conducting gel of Specimen 1 but rather high compared with the proton conductor reported so far. In this experiment, high ionic conductivity means high proton conductivity. Further, it can also be seen that when the phosphate molecular chains contain at least one of Ca²⁺, Mg²⁺ and Zn²⁺, the phosphate glass tends to be gelled. Since Ca²⁺, Mg²⁺ and Zn²⁺ are less toxic and compounds containing the metal ions are inexpensive, the production cost can be reduced. It is also possible to produce a proton conductor of any shape starting from the proton conducting gels of Specimens 1 to 3.

### (Evaluation 2)

Further, the ionic conductivity was measured for the proton conducting gel of the Specimen 1 and the sol-gel porous glass as the comparative product at a temperature of 50°C while changing the relative humidity from 20 to 90%. The result is shown in Fig. 2.

As shown in Fig. 2, the sol-gel porous glass as the comparative product showed extremely high ionic conductivity and had substantially the same extent of conductivity as the proton conducting gel of the Specimen 1 at a relative humidity of 70% or higher, but the ionic conductivity was lower by three digits or more comparedwith the ionic conductivity of the proton conducting gel of the Specimen 1 at a relative humidity of 20%. On the contrary, the proton conducting gel of the Specimen 1 showed a high ionic conductivity of 1 mS/cm even at a relative humidity of 20%. This is because the proton conducting gel of the Specimen 1 contains water in the inside. Further, the proton conducting gel of the Specimen 1 undergoes less effect of the change of ambient humidity. This is because the proton conducting gel of the Specimen 1 is stabilized by taking water present in the surroundings by itself. On the other hand, it can be seen that the ionic conductivity of the sol-gel porous glass undergoes significant effects by the change of the ambient humidity.

### (Evaluation 3)

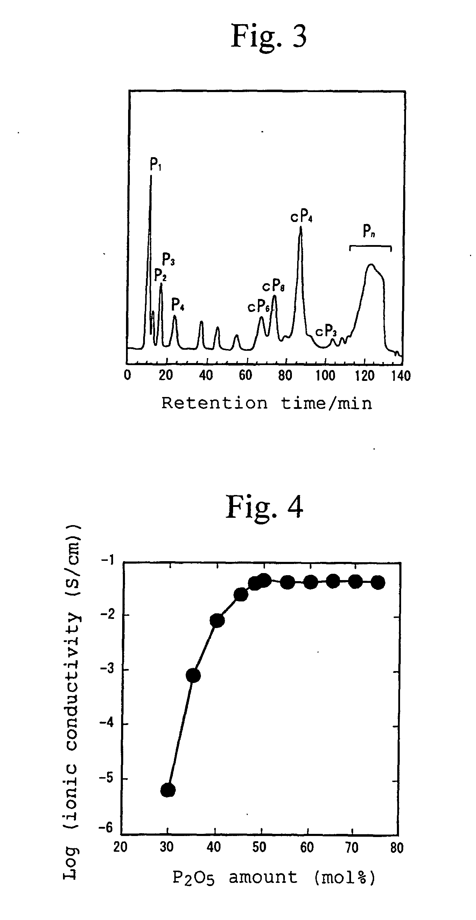

The proton conducting gel of the Specimen 1 was dissolved in an aqueous 0.012 mol/L solution of tetrasodium ethylenediamine tetraacetate and the structure of the phosphate chains was examined by a high performance chromatograph measuring apparatus. The result is shown in Fig. 3.

As shown in Fig. 3, it can be seen that the phosphate molecular chains of a linear structure (P1 (monomer) , P2 (dimer) , P3 (trimer), P4 (tetramer), Pn (long chain)) and a phosphate molecular chain of the cyclic structure (cP3 (trimer), cP3 (tetramer), cP6 (hexamer), cP8 (octamer)) are present together in the dispersion phase of the proton conducting gel of the Specimen 1.

### [Test 2]

### (Specimen 4)

In the Specimen 4, the ratio of phosphoric acid was 28 mol% as P₂O₅, to obtain aproton conducting gel. Other conditions are identical with those for the Specimen 1.

### (Specimen 5)

In the Specimen 5, the ratio of phosphoric acid was 30 mol% as P₂O₅. Other conditions are identical with those for the Specimen 1.

### (Specimen 6)

In the Specimen 6, the ratio of phosphoric acid was 35 mol% as P₂O₅. Other conditions are identical with those for the Specimen 1.

### (Specimen 7)

In the Specimen 7, the ratio of phosphoric acid was 40 mol% as P₂O₅. Other conditions are identical with those for the Specimen 1.

### (Specimen 8)

In the Specimen 8, the ratio of phosphoric acid was 45 mol% as P₂O₅. Other conditions are identical with those for the Specimen 1.

### (Specimen 9)

In the Specimen 9, the ratio of phosphoric acid was 47.5 mol% as P₂O₅. Other conditions are identical with those for the Specimen 1.

### (Specimen 10)

In the Specimen 10, the ratio of phosphoric acid was 55 mol% as P₂O₅. Other conditions are identical with those for the Specimen 1.

### (Specimen 11)

In the Specimen 11, the ratio of phosphoric acid was 60 mol% as P₂O₅. Other conditions are identical with those for the Specimen 1.

### (Specimen 12)

In the Specimen 12, the ratio of phosphoric acid was 65 mol% as P₂O₅. Other conditions are identical with those for the Specimen 1.

### (Specimen 13)

In the Specimen 13, the ratio of phosphoric acid was 70 mol% as P₂O₅. Other conditions are identical with those for the Specimen 1.

### (Specimen 14)

In the Specimen 14, the ratio of phosphoric acid was 75 mol% as P₂O₅. Other conditions are identical with those for the Specimen 1.

### (Specimen 15)

In the Specimen 15, the ratio of phosphoric acid was 80 mol% as P₂O₅. Other conditions are identical with those for the Specimen 1.

### (Evaluation 4)

For the Specimen 1 and Specimens 4 to 15, ionic conductivity was measured at a relative humidity of 70% and at 80°C in the same manner as in Evaluation 1. The result is shown in Fig. 4.

As shown in Fig. 4, it can be seen that each of the specimens showed the ionic conductivity to some extent in a case where the phosphate molecular chains contained phosphoric acid by 30 mol% or more and, particularly, showedhigh ionic conductivity of 10 mS/cm or more in a case of containing it 40 mol% or more and, particularly, showed an extremely high ionic conductivity of about 50 mS/cm in a case of containing it by 50 mol% or more, as P₂O₅. As the phosphoric acid content was higher, reactivity of the resultant phosphate glass to water increased and, in the Specimen 15 of highest phosphoric acid content as 80 mol%, when water was added to the phosphate glass in the gelation step, the phosphate glass dissolved rapidly making it difficult to keep the gelation state. Further, for the Specimen 4, it could not be melted in the vitrification step failing to obtain the phosphate glass.

### [Test 3]

### (Specimen 1)

### < Vitrifying step >

Calcium carbonate and phosphoric acid were provided and they were weighed respectively such that phosphoric acid was 60 mol% as P₂O₅ and the total amount of them was 30 g. They were placed in a beaker with addition of water, stirred and mixed sufficiently and then placed in a drier and dried at 100°C for 24 hours. The thus obtained dried powder mixture was placed in the platinum crucible, which was placed in an electric furnace kept at 1350°C and heated for 30 min and melted. Subsequently, the platinum crucible was taken out of the electric furnace and the molten product was cast on a graphite plate and then cooled as it was to a room temperature. Thus, calcium phosphate glass can be obtained. The obtained calcium phosphate glass was pulverized in an alumina mortar into a maximum grain size of 500 µm or less, to obtain a calcium phosphate glass powder.

Further, the calcium phosphate glass powder and CaSO₄·0.5H₂ were mixed at a weight ratio of 1 : 0.1, the mixture was placed in a platinum crucible, which was placed in an electric furnace kept at 800 °C, heated for 10 min and melted. Then, the platinum crucible was taken out of the electric furnace, the molten product was cast on a graphite plate and then cooled as it was to a room temperature. Thus, phosphate glass is obtained. The thus obtained phosphate glass was pulverized in an alumina mortar to a maximum grain size of 10 µm or less, to obtain a phosphate glass powder.

### < Gelation step >

Then, 2 g of the phosphate glass powder was placed in a plastic vessel, 2 mL of distilled water was added and stirred and then left for 3 days while applying a cover. Thus, a viscous proton conducting gel is obtained.

### (Evaluation 5)

Ingredients of the phosphate glass of the Specimen 16 were analyzed by an energy dispersive fluoro X-ray analyzing apparatus. As a result, presence of sulfur ingredient was confirmed. It can be seen from the foregoings that the sulfur ingredient is not evaporated but is contained in the phosphate glass and the presence of the sulfonic group is estimated.

Further, for the proton conducting gel of the Specimen 16, the ionic conductivity was measured at a relative humidity of 70% and 80°C in the same manner as in Evaluation 1. As a result, an extremely high ionic conductivity of 56 mS/cm was obtained. This is because the sulfonic group tends to dissociate protons more easily than phosphoric acid.

### [Test 4]

### (Specimen 17)

A proton conducting gel of the specimen 1 was placed in a vessel made of Teflon (registered trademark) and heated at 120°C for one hour. Thus, a clouded viscous proton conductor was obtained.

### (Evaluation 6)

The proton conductor of the specimen 17 was subjected to X-ray diffractiometry. As a result, formation of Ca(H₂PO₄)₂·H₂O was confirmed. Since it is apparent from the Evaluation 3 that two types of chains, i.e., the phosphate molecular chains of the linear structure and the phosphate molecular chains of the cyclic structure are present in the phosphate molecular chain present in the proton conducting gel, the proton conductor of the specimen 17 is a composite product of the gel and the crystals. For the proton conductor of the specimen 17, the ionic conductivity was measured at a relative humidity of 70% and 80°C in the same manner as in Evaluation 1. As a result, an extremely high ionic conductivity of 68 mS/cm was obtained. Further, since the proton conductor of the Specimen 17 is a composite product of gel and crystal, it can overcome the fragility.

### [Test 5]

### (Specimen 18)

The proton conducting gel of the Specimen 1 was left as it was for 30 days to obtain a viscous proton conducting gel of Specimen 18.

### (Evaluation 7)

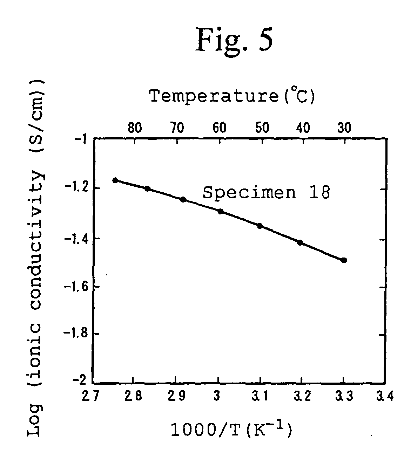

The proton conducting gel of the Specimen 18 was subj ected to X-ray diffractiometry. As a result, formation of Ca (H₂PO₄)₂·H₂O was confirmed in the same manner as for the proton conducting gel of the Specimen 17. For the proton conducting gel of the Specimen 18, the ionic conductivity was measured in a case of changing the temperature at a relative humidity of 70% in the same manner as in Evaluation 1. The result is shown in Fig. 5.

As shown in Fig. 5, the proton conductor of the Specimen 18 showed a high ionic conductivity. The value is comparable with those showing the highest ionic conductivity among the polymeric type solid electrolyte known so far.

### [Test 6]

### (Specimen 19)

### < Vitrifying step >

A calcium phosphate glass powder according to the Specimen 1 was obtained. On the other hand, zirconium oxide and phosphoric acid were provided, mixed such that phosphoric acid was 60 mol% as P₂O₅, the mixture was placed in a vessel made of Teflon (registered trademark) and put to autoclave treatment at 200°C for 5 hours. The obtained powder was crystals of γ type Zr(HPO₄)₂ · 2H₂O according to X-ray diffractiometry. The crystal is a layered compound having an interlayer distance of 11.6 Å.

### < Molding step >

After mixing the calcium phosphate glass powder and γ type Zr(HPO₄)₂ · 2H₂O at 1 : 1 weight ratio, they were filled in a die and press molded at 30 MPa. Thus, a pellet of 10 mm diameter and 1 mm thickness was obtained.

### < Reaction step >

2 mL of distilled water was added to the pellet and kept at a room temperature for 3 days while applying a cover. Thus, a proton conductor of Specimen 19 in which the proton conducting gel of the Specimen 1 and γ type Zr(HPO₄)₂·2H₂O were composited was obtained. In this way, since the pellet was obtained previously by the molding step and the pellet was reacted with water in the reaction step to form a proton conductor, it has a merit that the handling of the pellet is easy.

### (Evaluation 8)

For the proton conductor in the Specimen 19, the ionic conductivity was measured at a relative humidity of 70% and at 90°C in the same manner as in Evaluation 1. As a result, the proton conductor of the Specimen 19 showed a high ionic conductivity of 55 mS/cm. Further, the proton conductor of the Specimen 19 could overcome the fragility.

### [Test 7]

### (Specimen 20)

### < Vitrifying step >

In the same manner as for the Specimens 1, 19, the calcium phosphate glass powder of the Specimen 1 and γ type Zr(HPO₄)₂ · 2H₂O crystal were obtained.

### < Gelation step >

Then, a proton conducting gel was obtained by adding 1 mL of distilled water to 1 g of the calcium phosphate glass powder and keeping them at a room temperature for one day while applying a cover. Further, 2 g of γ type Zr(HPO₄)₂·2H₂O crystal was added into the proton conducting gel, sufficiently kneading therein and then stood still for two days. Thus, a proton conducting gel of Specimen 20 is obtained.

### (Evaluation 9)

For the proton conductor of the Specimen 20, the ionic conductivity was measured at a relative humidity 70% and at 90°C in the same manner as in Evaluation 1. As a result, the proton conducting gel of the Specimen 20 showed a high ionic conductivity of 52 mS/cm.

### [Test 8]

### (Specimen 21)

### < Vitrifying step >

In the same manner as for the Specimen 1, a calcium phosphate glass powder was obtained. 5 g of the calcium phosphate glass powder was filled in a plastic vessel. On the other hand, a sol was obtained in the same manner as the comparative specimen.

The sol was added to the plastic container incorporated with the calcium phosphate glass powder and then stirred sufficiently. Then, it was dried for 1 month to obtain a composite product comprising the calcium phosphate glass powder and the sol-gel porous glass. After placing the composite product into an electric furnace and heating at 600°C for 3 hours, electric supply to the electric furnace was stopped and the product was allowed to cool spontaneously, to obtain a glass composite product.

### < Gelation step >

10 mL of distilled water was added to the glass composite product and left at a room temperature for 3 days. Thus, a proton conducting gel of the Specimen 21 in which the proton conducting gel and the sol-gel porous glass are composited was obtained.

### (Evaluation 10)

For the proton conducting gel of the specimen 21, the ionic conductivity was measured at a relative humidity of 70% and at 90°C in the same manner as in Evaluation 1. As a result, the proton conducting gel of the Specimen 21 showed a high ionic conductivity of 47 mS/cm. Further, the ionic conductivity of the proton conducting gel of the Specimen 21 was 1 mS/cm at a relative humidity of 30% and at 50°C. From the foregoings, it can be seen that the proton conducting gel of the Specimen 21 has high ionic conductivity and less undergoes the effect of the ambient humidity.

### (Evaluation 11)

Further, when the specific surface area of the proton conducting gel of the Specimen 21 was measured by the BET method, it was 5 m²/g. On the other hand, since the specific surface area of the sol-gel porous glass as the comparative product was 400 m²/g, it can be seen that the proton conducting gel of the Specimen 21 is extremely dense and pores were scarcely present. Accordingly, also in a case of using the proton conducting gel of the Specimen 21 for the fuel cell of a type introducing methanol directly to the anode, cross-over phenomenon less occurs and high power generation efficiency can be maintained more easily.

### [Test 9]

### (Specimen 22)

### < Vitrifying step >

In the same manner as the Specimen 1, a calcium phosphate glass powder was obtained. On the other hand, in the same manner as in the comparative specimen, a dried gel was obtained and a dried gel powder by pulverizing the dried gel was obtained.

### < Molding step >

After mixing the calcium phosphate glass powder and the dried gel powder at 1 : 1 weight ratio, they were filled in a die and press molded at 40 MPa. Thus, a pellet of 10 mm diameter and 1 mm thickness was obtained. The pellet was placed in an electric furnace and then heated at 600°C for 3 hours. Then, electric supply to the electric furnace was stopped and the pellet was allowed to cool spontaneously in the electric furnace to obtain a sintered glass pellet.

### < Gelation step >

10 mL of distilled water was added to the sintered glass pellet and it was left at a room temperature for 3 days. Thus, the proton conductor of the Specimen 22 in which the proton conducting gel and the sol-gel porous glass were composited was obtained. In this way, since the sintered glass pellet was obtained previously by the molding step and the sintered glass pellet was reacted with water in the reaction step to form a proton conductor, it has a merit that handling of the sintered glass pellet was easy.

### (Evaluation 12)

For the proton conductor of the Test specimen 22, the ionic conductivity was measured at a relative humidity of 70% and at 90°C in the same manner as in Evaluation 1. As a result, the proton conductor of the Specimen 22 showed a high ionic conductivity of 50 mS/cm. Since the proton conductor of the Specimen 22 used the sintered glass pellet obtained by heat treating the pellet using the dried gel powder, it showed somewhat higher ionic conductivity compared with the proton conductor of the specimen 21.

Examples and application examples described above are examples and the present invention can be practiced in a manner of applying various modifications within a scope not departing the gist thereof.

### Industrial applicability

The ionic conductivity of the proton conducting gel according to the present invention is high near the room temperature. When the proton conducting gel is molded into an appropriate shape, a proton conductor is formed. For example, when the proton conducting gel is molded, for example, by spreading thinly on the plane or filled in a thin container, a proton conductor reduced in the thickness and enlarged in the size can be obtained easily. Further, the proton conductor formed by molding the proton conducting gel of the gel-like material has flexibility and resistance to impact shocks.

## Claims

1. A proton conducting gel having a dispersion phase comprising phosphate molecular chains and a dispersion medium comprising water.

2. A proton conducting gel according to claim 1, wherein the phosphate molecular chains contain a bivalent metal ions.

3. A proton conducting gel according to claim 2, wherein the bivalent metal ion is at least one of Ca²⁺, Mg²⁺ and Zn²⁺.

4. A proton conducting gel according to any one of claims 1 to 3, wherein the phosphate molecular chains contain sulfonic groups.

5. A proton conducting gel according to any one of claims 1 to 4, wherein the dispersion phase contains phosphate molecular chains of a linear structure.

6. A proton conducting gel according to any one of claims 1 to 4, wherein the dispersion phase contains phosphate molecular chains of a cyclic structure.

7. A proton conducting gel according to any one of claims 1 to 6, wherein thephosphatemolecular chains containphosphoric acid within a range from 30 to 75 mol% as P₂O₅.

8. A proton conducting gel according to claim 7, wherein the phosphate molecular chains contain phosphoric acid within a range from 40 to 70 mol% as P₂O₅.

9. A proton conducting gel according to claim 8, wherein the phosphate molecular chains contain phosphoric acid within a range from 50 to 60 mol% as P₂O₅.

10. A process for producing a proton conducting gel comprising:
a vitrifying step of obtaining a phosphate glass and
a gelation step of reacting a phosphate glass powder formed by pulverizing the phosphate glass and water to obtain a proton conducting gel.

11. Aproductionprocess for a proton conducting gel according to claim 10, wherein other proton conduction composition is also present to the proton conducting gel in the gelation step.

12. A proton conductor comprising a proton conducting gel according to any one of claims 1 to 9 and other proton conduction composition.

13. A process for producing a proton conductor comprising molding the proton conducting gel according to claim 10 or 11 to form a proton conductor.

14. A process for producing a proton conductor comprising
a vitrifying step of obtaining a phosphate glass,
a molding step of obtaining a molding product from a phosphate glass powder formedbypulverizing the phosphate glass and
a reaction step of reacting the molding product and water into a proton conductor.

15. A production process for the proton conductor according to claim 14, wherein other proton conduction composition is also present in the molding product in the molding step.

## Amended claims

### Amended claims under Art. 19.1 PCT

**1.** (amended) A proton conduction gel having a dispersion phase comprising phosphate molecular chains in which OH groups arebondedtophosphorus atoms and a dispersion medium comprising water present at the periphery of each of the OH groups of said phosphate molecular chains.

**2.** A proton conducting gel according to claim 1, wherein the phosphate molecular chains contain a bivalent metal ions.

**3.** A proton conducting gel according to claim 2, wherein the bivalent metal ion is at least one of Ca²⁺, Mg²⁺ and Zn²⁺.

**4.** A proton conducting gel according to any one of claims 1 to 3, wherein the phosphate molecular chains contain sulfonic groups.

**5.** A proton conducting gel according to any one of claims 1 to 4, wherein the dispersionphase contains phosphate molecular chains of a linear structure.

**6.** A proton conducting gel according to any one of claims 1 to 4, wherein the dispersionphase contains phosphatemolecular chains of a cyclic structure.

**7.** A proton conducting gel according to any one of claims 1 to 6, wherein thephosphatemolecular chains containphosphoric acid within a range from 30 to 75 mol% as P₂O₅.

**8.** A proton conducting gel according to claim 7, wherein the phosphate molecular chains contain phosphoric acid within a range from 40 to 70 mol% as P₂O₅.

**9.** A proton conducting gel according to claim 8, wherein the phosphate molecular chains contain phosphoric acid within a range from 50 to 60 mol% as P₂O₅.

**10.** (amended) A process for producing a proton conduction gel comprising;
a vitrifying step of obtaining phosphate glass by a melting method and
a gelation step of reacting a phosphate glass powder formed by pulverizing the phosphate glass and water thereby obtaining a proton conduction gel having a dispersion phase comprising phosphate molecular chains in which OH groups are bonded to phosphorus atoms and a dispersion medium comprising water present at the periphery of each of the OH groups of saidphosphate molecular chains.

**11.** Aproductionprocess for aproton conducting gel according to claim 10, wherein other proton conduction composition is also present to the proton conducting gel in the gelation step.

**12.** A proton conductor comprising a proton conducting gel according to any one of claims 1 to 9 and other proton conduction composition.

**13.** A process for producing a proton conductor comprising molding the proton conducting gel according to claim 10 or 11 to form a proton conductor.

**14.** (amended) A process for producing a proton conduction gel comprising;
a vitrifying step of obtaining phosphate glass by a melting method,
a molding step of obtaining a molding product from a phosphate glass powder formed by pulverizing the phosphate glass, and
a reaction step of reacting the molding product with water to form a proton conductor having a dispersion phase comprising phosphate molecular chains in which OH groups are bonded to phosphorus atoms and a dispersion medium comprising water present at the periphery of each of the OH groups of said phosphate molecular chains.

**15.** A production process for the proton conductor according to claim 14, wherein other proton conduction composition is also present in the molding product in the molding step.

Statement under Art. 19.1 PCT
Claim 1 makes it clearer that the proton conduction gel of the present invention is different from the known sol-gel porous glass or the dispersion thereof in water.

Since the phosphate glass is obtained by a melting method of using a relatively inexpensive inorganic compound such as phosphoric acid, the proton conduction gel of the invention has a structure defined in claim 1. That is, in the phosphate glass obtained by the melting method, as shown in Reference Figure 1, phosphorus atoms are linearly or cyclically bonded through bridging oxygen, and non-crosslinking oxygen is also bonded to the phosphate molecular chains and hydrogen ion is bonded to the non-crosslinking oxygen to form an OH group. When the phosphate glass obtained by the melting method is dispersed in water, since phosphoric acid is strongly acidic, as shown in Reference Figure 2, the phosphate molecular chains are disconnected at the OH groups to dissociate protons. The dissociated proton disconnects the bond of M²⁺ such as Ca to further dissociate a proton. Thus, in the proton conduction gel of the invention, the phosphate molecular chains in which OH groups are bonded to phosphorus atoms constitute a dispersion phase and water present at the periphery for each of the OH groups in the phosphate molecular chains forms a dispersion medium. Accordingly, in the proton conduction gel of the invention, protons are conducted successivelyby wayof a proton conduction path comprising the molecule of water and other OH groups coordinated at the periphery.

On the contrary, the cited reference merely discloses a known sol-gel porous glass. The known sol-gel porous glass is a P₂O₅-SiO₂ system and P₂O₅ is incorporated only by about 10% in the P₂O₅-SiO₂ system (Journal of the American Ceramic Society, Vol. 84, 2553-1556 (2001)). Therefore, the P₂O₅-SiO₂ system sol-gel porous glass has a network structure substantially identical with that of silica glass and can not form phosphate molecular chains as in the invention ("Dispersion Type Energy System and Fuel Cell", CMC, published in 2001, pages 199 - 209) . Then, as a matter of fact, even when the P₂O₅-SiO₂ system sol-gel porous glass is dispersed in water, it does not form the structure as described in the invention.

The difference of the structure described above is demonstrated by nuclear magnetic resonance apparatus (NMR) or high speed liquid chromatography. Then, different from the known sol-gel porous glass or the dispersion thereof in water, the proton conduction gel of the invention can always ensure the proton conduction path thereby providing excellent proton conductivity. In addition since the production process is relatively simple, the production cost can be reduced.

Claims 10 and 14 make it clearer that the phosphate glass is not obtained by the sol-gel method but the phosphate glass is obtained by the melting method, as well as that the proton conduction gel of claim 1 is formed thereby. In view of the amendment described above, it is apparent that claims 2 to 9, 11 to 13, and 15 are different from the known sol-gel porous glass or dispersion thereof in water, and the manufacturing method thereof.
